# EUROPÄISCHE PATENTSCHRIFT

(11) **EP 1 554 044 B1**
(45) Veröffentlichungstag und Bekanntmachung des Hinweises auf die Patenterteilung: **21.01.2009**
(21) Anmeldenummer: 03795726.3
(22) Anmeldetag: 14.10.2003
(51) Int. Cl.: B02C 13/20, B02C 13/22

(54) **VERFAHREN UND VORRICHTUNG ZUR DESINTEGRATION INSBESONDERE VON ANORGANISCHEN STOFFEN**
METHOD AND DEVICE FOR THE DISINTEGRATION OF ESPECIALLY INORGANIC MATERIALS
PROCEDE ET DISPOSITIF POUR DESINTEGRER NOTAMMENT DES MATIERES INORGANIQUES

(30) Priorität: 17.10.2002 DE 10248612; 19.12.2002 DE 10259456
(43) Veröffentlichungstag der Anmeldung: 20.07.2005
(73) Patentinhaber: Krause Maschinenbau GmbH, 83104 Tuntenhausen (DE)
(72) Erfinder: KRAUSE, Peter, 83109 Grosskarolinenfeld (DE); BARON, Alfred, 81371 München (DE); HILGER, Georg, 83104 Ostermünchen (DE); MENZEL, Walter, 52349 Düren (DE); PAHNKE, Ulf, 82319 Starnberg (DE); KRENSKI, Rainer, 83229 Aschau (DE)
(74) Vertreter: Flach, Dieter Rolf Paul
(86) Internationale Anmeldenummer: PCT/DE2003/003402
(87) Internationale Veröffentlichungsnummer: WO 2004/037425

(56) Entgegenhaltungen:
- DE-A- 2 827 944
- US-A- 2 338 373
- US-A- 4 522 342

## Beschreibung

Die Erfindung betrifft ein Verfahren zur Desintegration und tribochemischen Aktivierung von insbesondere anorganischen Stoffen nach dem Oberbegriff des Anspruches 1 sowie eine zugehörige Vorrichtung nach dem Oberbegriff des Anspruches 7.

Desintegratoren sind für verschiedene Anwendungen bekannt. Bei der Zementherstellung werden zum Beispiel im grosstechnischen Umfang Kalksteinbrocken und verschiedene Zusätze zunächst zerkleinert, anschließend auf Temperaturen von 1400°C bis 1600°C erhitzt, gesintert und anschließend auf die gewünschten Korngrößen zermahlen.

Der Nachteil dieses Verfahrens besteht darin, dass für die Aktivierung der Ausgangsmaterialien ein hoher Energieeinsatz notwendig ist.

Aus der DE-A1-195 48 645 ist bekannt, durch tribochemisch behandelte Kristalle einen erhöhten potentiellen Energiegehalt und damit eine erhöhte chemische Reaktionsfähigkeit zu erreichen. Die mechanische Aktivierung von Zement ermöglicht zum Beispiel eine wesentliche Festigkeitssteigerung des hydratisierten mineralischen Bindemittels. Ursache dafür sind die Primärpartikelgrösse und Gitterstörungen dieser Partikel.

Auch in der DE-A1-28 27 944 wird ein Verfahren beschrieben, wie ein aktivierter Putzmörtel hergestellt werden kann, indem Komponenten der Zusammensetzung durch mechanische Schlag- und Stoßeinwirkung von 3...8 Schlägen in Abständen von 10² s bis 10³ s mechanochemisch so verändert werden, dass sie ein erhöhtes Reaktionsvermögen besitzen.

Für die tribometrische Bearbeitung von Ausgangsstoffen stehen mehrere Bearbeitungsverfahren zur Verfügung, wie z. B. Zermahlen durch Beanspruchung zwischen zwei Flächen, oder durch Kollisionen frei beweglicher Partikel mit festen Flächen oder durch Kollisionen der Partikel untereinander. Für die Einbringung einer hohen potentiellen Energie in kleinste Partikel in der Grössenordnung von einigen 1 µm und die damit hervorgerufenen Gitterstörungen werden sogenannte Desintegratoren eingesetzt. Das Aufbauprinzip ist durch zwei gegeneinanderlaufende Stift- oder Zahnkränze gekennzeichnet. In einer Variante werden die Partikel, wie in der DE-AS 12 36 915 beschrieben, durch Kollision mit den Stiften bzw. Zähnen zerkleinert. Für eine ausreichende Aktivierung werden dabei mindestens drei Kollisionen mit den Stiften in einem Abstand von höchstens 50 ms bei einer Relativgeschwindigkeit von wenigstens 15 m/s gefordert. Nachteilig bei dieser Anordnung ist, dass der Verschleiss der Stifte, insbesondere bei sehr harten Ausgangsmaterialien, sehr hoch ist.

Bekannt ist die Verwendung aerodynamisch ausgeformter Stifte zur Reduzierung des Luftwiderstandes. In der US-Anmeldung 2,338373 werden Stifte in Tropfenform beschrieben, um den notwendigen Energieeintrag zu vermindern. Auch die US 4,522342 beschäftigt sich mit der Form der rotierenden Schlagwerkzeuge. Es wurde als vorteilhaft herausgefunden, die Schlagwerkzeuge mit einem hinter der Laufrichtung angeordneten Schleppprofil zu versehen, um Wirbelbildung und Kavitation zu verhindern. Nach vorn offene. Taschen nehmen Mahlgut auf, sodass der eigentliche Zerkleinerungsvorgang auf Mahlgut stattfindet und auf diese Weise der Verschleiß der Stifte verringert wird und die Stifte auf der Rückseite ein strömungstechnisch günstiges Profil besitzen. All diesen Lösungen ist gemeinsam, dass als Ziel einer aerodynamischen Ausformung der Schlagstifte, Schlagwerkzeuge bzw. Formkörper die Reduzierung des Strömungswiderstandes ist.

Bei einer anderen Variante, z. B. nach DE-A1-30 34 849, wird das Ausgangsmaterial primär durch Nutzung von Kollisionen der Partikel in Wirbeln zerkleinert, wobei die Wirbel durch speziell ausgeformte, gegenläufige Schaufelkränze erzeugt werden. Gleichzeitig wird damit erreicht, dass der Verschleiss an den Aufschlagkanten der Schaufeln bzw. Zahnkränze wesentlich reduziert wird.

Für die Entwicklung neuartiger anorganischer Bindemittel ist die mit bekannten Desintegratoren oder Mühlen erreichbare Aktivierung nicht ausreichend.

Besonders bei kleinen, leichten Teilchen, wie sie sich nach kurzer Mahldauer einstellen, ist das Hervorrufen einer Kollision dieser Partikel mit einer hohen Relativgeschwindigkeit von beispielsweise grösser 100 m/s durch die Einbettung dieser Partikel in einem Luftstrom oder Luftwirbel nicht realisierbar.

Der Erfindung liegt die Aufgabe zugrunde, ein Verfahren und eine Vorrichtung zur Desintegration bereitzustellen, bei dem eine dynamische Behandlung der Partikel mit gegenüber dem Stand der Technik wesentlich erhöhten Energien und Einwirkungsfrequenzen erfolgt.

Diese Aufgabe wird bezüglich des Verfahrens entsprechend den im Anspruch 1 und bezüglich der Vorrichtung entsprechend den im Anspruch 7 angegebenen Merkmalen gelöst. Vorteilhafte Ausgestaltungen der Erfindung sind in den Unteransprüchen angegeben.

Im Rahmen der Erfindung ist also vorgesehen, dass die Ausgangsstoffe (beispielsweise in Form eines Granulates) mit Hilfe von Stossdruckwellen eines breiten Frequenzspektrums und einer Impulsdauer von jeweils kleiner 10 µs ausgesetzt werden. Durch die Einwirkung der in kurzer Folge auf die Partikel mit Überschallgeschwindigkeit auftreffenden Stossdruckwellen erfolgt eine weitere Zerkleinerung der Partikel bis zur Zerstörung der Kristallgitterstruktur. Im Ergebnis dieser Zerkleinerung entsteht ein Konglomerat von Mischkristallen, die eine erhöhte Fähigkeit zur Kristallbildung bei einer späteren Wasserzuführung besitzen. Die Stossdruckwellen werden durch Formkörper mit aerodynamisch geformtem Profil und Oberflächen erzeugt, die bis in den sogenannten transsonischen Bereich beschleunigt werden. Somit werden Stoßdruckfronten erzeugt, die das in den Desintegrator eingeführte Granulat auf die gewünschte Partikelgröße zertrümmern. Die Formkörper bewegen sich dabei auf Scheiben nahe unterhalb der Schallgeschwindigkeit. Bedingt durch die Einwirkung von hoher mechanischer Energie erfolgt neben der Zerkleinerung eine Aktivierung der Partikel und damit eine Veränderung der chemischen Eigenschaften.

Bei organischen Stoffen ist eine Vorbehandlung zwecks Reduzierung der Elastizität erforderlich.

Liegt nun die Relativgeschwindigkeit der gegen die Formkörper anströmenden Luft einschließlich der in dieser Luft schwebenden Partikel dicht unterhalb der Schallgeschwindigkeit, so kann die Strömungsgeschwindigkeit gegenüber dem Formkörper partiell Überschallgeschwindigkeit erreichen. Der Geschwindigkeitsbereich unterhalb der Schallgeschwindigkeit, bei dem die den Formkörper umströmende Luft partiell Überschallgeschwindigkeit besitzt, wird in der Literatur als transsonischer Geschwindigkeitsbereich (Sigloch: Technische Fluidmechanik; VDI-Verlag 1996) bezeichnet.

Zur Vermeidung chemischer Reaktionen können an Stelle von Luft entsprechende Schutzgase eingesetzt werden.

Je nach Ausformung des aerodynamisch wirkenden Formkörpers beginnt der transsonische Geschwindigkeitsbereich bei 0,75 ... 0,85 Mach und endet bei Erreichen der Schallgeschwindigkeit des Formkörpers gegenüber der anströmenden Luft.

Liegt die Geschwindigkeit der anströmenden Luft gegenüber dem Formkörper im transsonischen Geschwindigkeitsbereich, tritt bezogen auf das aerodynamische Profil des Formkörpers in einer Zone Überschallgeschwindigkeit auf. Diese Zone der mit Überschall relativ zum Formkörper strömenden Luft wird durch einen Verdichterstoß, einen Hauptstoß und dem Profil des Formkörpers begrenzt. An der Rückfront findet ein Übergang von Überschallgeschwindigkeit zur Normalgeschwindigkeit statt. Dieser Übergang wird begleitet durch eine Stoßdruckfront, d. h. der Luftdruck steigt auf das Mehrfache des Normaldruckes an und fällt dann anschließend nach einer kurzen Unterdruckphase wieder auf Normaldruck ab. Die Besonderheit dieser Stoßdruckfront besteht darin, dass die Druckwechsel theoretisch auf wenige Moleküllängen begrenzt sind, praktisch aber durch Erwärmung und Verwirbelungen in der Größenordnung von 100 µm, in jedem Fall aber bezogen auf die Geometrie der Formkörper sehr kurz sind.

Diese Effekte sind bei der Entwicklung von Tragflächenprofilen für Überschall-Flugzeuge hinreichend bekannt und eher unerwünscht. Die Stoßdruckfront beansprucht die Außenhaut der Flügel erheblich. Zudem erfordert die Verdichtung der Luft zu einer Stoßdruckfront eine erhöhte Vortriebsenergie des Flugzeuges. Durch besondere Gestaltung der Tragflächenprofile wird deshalb versucht, die Effekte des transsonischen Geschwindigkeitsbereiches abzumildern und diesen Bereich schnell zu überwinden ("Durchbruch der Schallmauer").

Während in den oben zitierten Schriften US-A-2 338 373 und US-A-4 522 342 das Ziel die Reduzierung des Strömungswiderstandes ist, wird bei dem erfindungsgemäßen Verfahren angestrebt, mechanische Energie für die Erzeugung von Stoßdruckwellen in der umströmenden Luft zu nutzen. Typisch ist also eher eine Erhöhung des Strömungswiderstandes bei Geschwindigkeiten im transsonischen Geschwindigkeitsbereich.

Erfindungsgemäß werden die Effekte des transsonischen Geschwindigkeitsbereiches für die Zerkleinerung und Aktivierung von mineralischem Granulat benutzt. Die Nutzung der Stoßdruckfront ist dabei sehr effizient durch zwei Faktoren. Einmal handelt es sich bei der Stoßdruckfront um einen sehr kurzen Impuls mit einer Anstiegszeit von wenigen µs. Zum anderen ist die unmittelbare Aufeinanderfolge von Druckanstieg und Druckabfall sehr wirksam bezogen auf die mechanische Beanspruchung des Granulates. Der Druckstoß kann spektral weiterhin aufgefasst werden als Summe von Druckwellen recht unterschiedlicher Frequenz. Bedingt durch die Steilheit des Druckstoßes sind also auch Frequenzanteile von Druckwellen mit einigen 100 kHz enthalten. Damit finden sich für unterschiedliche Partikelgrößen und -koinsistenz Anteile einer charakteristischen Bruchfrequenz, die besonders wirksam in Richtung der gewollten Zerkleinerung und Aktivierung sind.

Der erfindungsgemäße Aufbau des Desintegrators setzt dabei das Granulat bzw. die Partikel aufeinanderfolgend mehreren Hundert dieser Stoßdruckfronten aus. Das wird zunächst durch die Verwendung mehrerer Formkörper erreicht, die um eine gemeinsame Achse rotieren. Weiterhin wird durch eine gegenläufige Gruppe von Formkörpern verhindert, dass die Relativgeschwindigkeit der Formkörper gegenüber der Luft mit dem eingelagerten Granulat bzw. Partikeln durch Mitnahmeeffekte verringert wird. Damit bewegen sich die Partikel bezogen auf die Schallgeschwindigkeit relativ langsam durch den Desintegrationsraum durch abwechselnde Mitnahme der Partikel in die eine oder andere Richtung.

Die Folgefrequenz der Stoßdruckfronten liegt dabei im Ultraschallbereich, ist unhörbar und lässt sich relativ gut zum Schutz des Betreiberpersonals dämpfen.

Damit ergeben sich Richtlinien für eine optimale Profilgestaltung für die Anwendung des Verfahrens.

Eine Kollision der Partikel mit den Formkörpern ist bei geeignete Gestaltung der Vorderflächen des Formkörpers relativ selten, da insbesondere kleinere Partikel um die Oberfläche der Formkörper herum mitgenommen werden. Eine besondere Armierung bzw. Panzerung der Vorderflächen der Formkörper ist nicht erforderlich. Lediglich an der Abtriebsseite, also bezogen auf die Anströmung im hinteren Bereich treten am Schnittpunkt der Stoßdruckfront mit der Oberfläche des Formkörpers höhere Belastungen auf, die durch geeignete Werkstoffe wie hochlegierte Werkzeugstähle abgefangen werden können. Möglich ist die Ausbildung der Oberfläche des Formkörpers als sogenanntes unterkritisches Profil, das heißt, die umfließende Strömung ist im wesentlichen laminar (Sigloch: Technische Fluidmechanik; VDI-Verlag 1996). Der Formkörper ist dabei an der Vorderfront abgerundet und seine Abströmflächen laufen im spitzen Winkel zueinander aus.

Die Erfindung wird nachstehend anhand eines Ausführungsbeispieles näher beschrieben.

Es zeigen:
- Figur 1a:: das Profil des Formkörpers, der im Unterschallbereich umströmt wird,
- Figur 1b:: die Lage des Überschallbereiches bezogen auf einen Formkörper, der im transsonischen Geschwindigkeitsbereich mit Luft angeströmt wird,
- Figur 2:: die abwechselnde Einwirkung von Stoßdruckfronten auf einen Partikel,
- Figur 3:: Anordnung der gegenläufig bewegten Formkörper,
- Figur 4:: Querschnitt durch die Desintegratoranordnung,
- Figur 5:: Seitenansicht des Desintegrators entlang der Schnittlinie A-A gem. Fig. 4,
- Figur 6:: Gestaltung eines Formkörpers im Querschnitt.

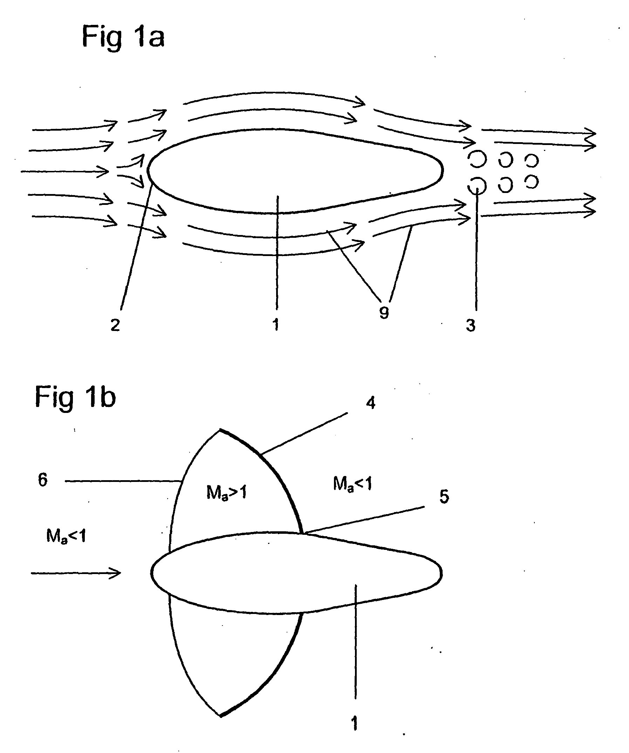

Fig. 1a zeigt zunächst einen typisch ausgeformten Formkörper 1 zusammen mit Strömungslinien 9 im Unterschallbereich. Die Strömungslinien 9 umfließen zunächst laminar das Profil des Formkörpers 1, wobei im hinteren Bereich des Formkörpers 1 in Abhängigkeit vom Profil des Formkörpers 1 die laminare Strömung abreißen kann und Turbulenzen 3 auftreten können.

In Figur 1b werden die Geschwindigkeitsverhältnisse im sogenannten transsonischen Geschwindigkeitsbereich verdeutlicht. Bezogen auf die Oberfläche des Formkörpers 1 bildet sich eine Zone heraus, bei der die Relativgeschwindigkeit der umströmenden Luft partiell Überschallgeschwindigkeit erreicht. Der Bereich ist in Figur 1b mit "Ma > 1" gekennzeichnet. Der Bereich ist stromaufwärts mit dem Verdichterstoß 6 und stromabwärts durch die Stoßdruckfront des Hauptstoßes 4 begrenzt. Mit dem Punkt 5a ist die Stelle des Profils gekennzeichnet, an dem die Front des Verdichterstoßes das Profil berührt. Allerdings reicht der Verdichterstoß nur in die äußere Zone einer das Profil umgebenden Grenzschicht hinein. Innerhalb dieser Grenzschicht breitet sich der Druck des Hauptstoßes 6 stromaufwärts vom Punkt 5b in Richtung Punkt 5a aus. Damit steigt die Wahrscheinlichkeit einer Strömungsablösung.

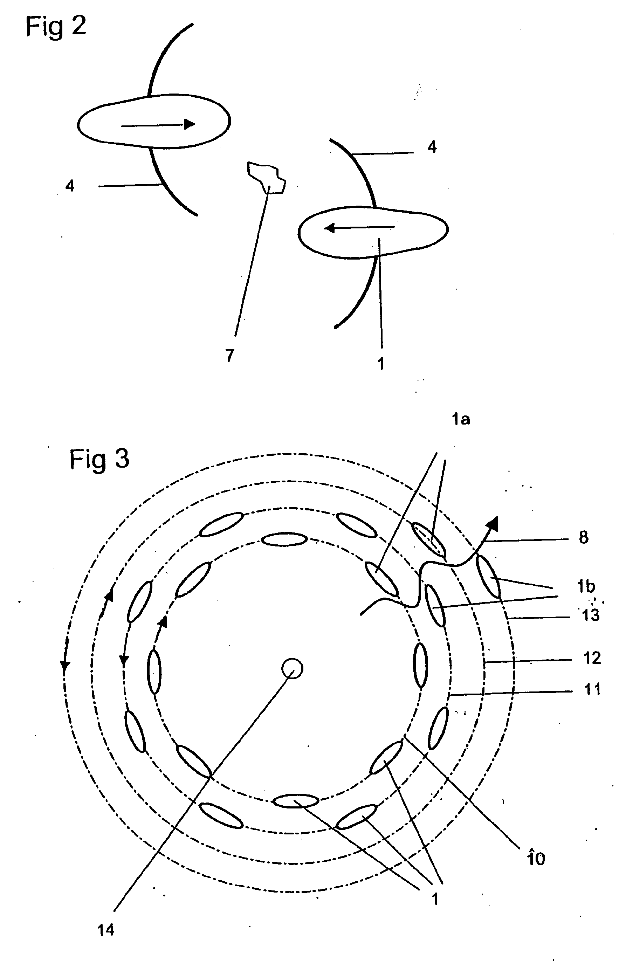

Figur 2 verdeutlicht die Wirkung der Stoßdruckfronten 4 auf einen Partikel 30. Abwechselnd durchläuft der Partikel 30 zweimal eine Stoßdruckfront 4 mit unterschiedlicher Richtung.

In der Figur 3 wird die Anordnung der Formkörper 1 zueinander verdeutlicht. Beispielhaft werden zwei Gruppen von Formkörpern 1a und 1b dargestellt, die mit bzw. gegen die Uhrzeigerrichtung um die Achse 14 rotieren. Im Ausführungsbeispiel enthält jede Gruppe jeweils 16 Formkörper, die mit einer Umlauffrequenz von 500 Umdrehungen/Sekunde um die Achse 14 rotieren. Bei einem Radius von 100 mm ergibt sich eine Relativgeschwindigkeit von ca. 315 Meter/Sekunde, d. h. ca. 95 % der Schallgeschwindigkeit. Die Abfolge der Stoßdruckfronten 4 ohne Berücksichtigung der gegenläufigen Gruppe beträgt dabei 8 kHz. Der Partikelweg 8 im Desintegrationsraum 29 wird in der Figur 3 schematisch dargestellt.

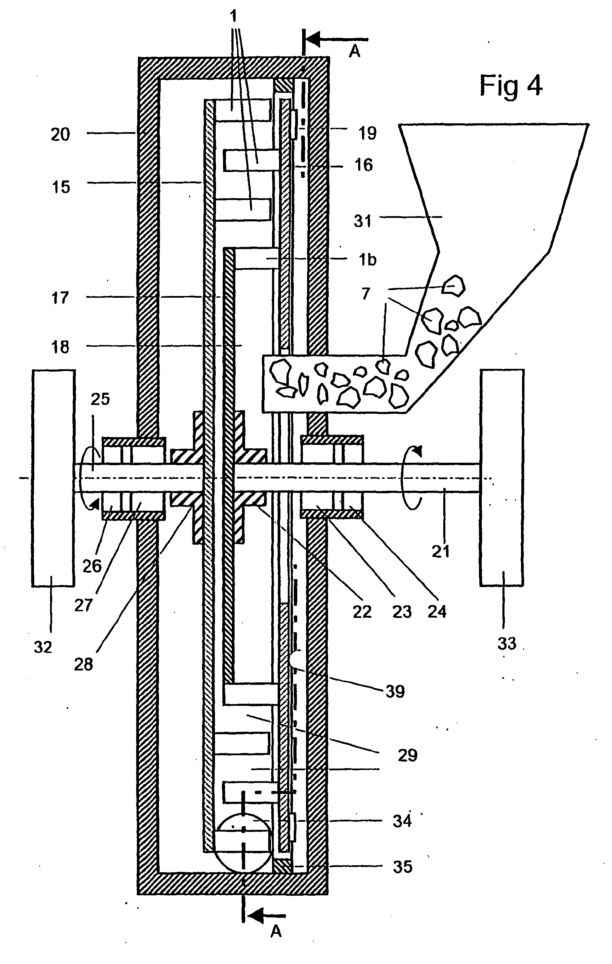

In der Figur 4 ist ein Querschnitt eines erfindungsgemässen Desintegrators dargestellt. Die Formkörper 1 der ersten Gruppe 1a sind auf der Scheibe A 15 befestigt. Im Ausführungsbeispiel werden dabei zwei Gruppen pro Umlaufrichtung verwendet. Die Scheibe A 15 ist wiederum mit der Nabe A 28 auf der Achse 25 befestigt, die durch einen Antriebsmotor 32 in Rotation mit der notwendigen Mindestdrehzahl in Bewegung versetzt wird. Die Achse 25 ist im Gehäuse 20 über das Lager A 26 gelagert. Eine Wellendichtung A 27 verhindert das Austreten von Partikeln 30 bzw. die Verunreinigung der Lager A 26. Die zweite Gruppe der Formkörper 1b ist auf der Scheibe B 16 befestigt. Diese Scheibe B 16 ist mit der Scheibe B 17 und der Achse B 21 fest verbunden, wobei die Achse B 21 wiederum über das Lager B 24 ebenfalls im Gehäuse 20 gelagert ist. Die zweite Gruppe der Formkörper 1 b wird durch den Motor 33 entgegen der Drehrichtung des Motors 32 angetrieben.

Das Einfüllen des Granulates 7 erfolgt über den Einfüllstutzen 31 nahe dem Zentrum des Desintegrators in die Einfüllkammer 18. Hier gelangt das Granulat 7 in den Einflussbereich der Stoßdruckfronten 4 und wird dabei auf dem Weg in die äusseren Bereiche zertrümmert.

Bei der Ausführung des erfindungsgemäßen Desintegrators ist zu beachten, dass durch die mit hoher Umdrehungszahl umlaufenden Scheiben 15 und 16 mit den darauf befestigten formkörpern 1 Luft mitgerissen wird, die durch Zentrifugalkräfte nach aussen befördert wird. Während in dem Desintegrationsraum 29 ein ständiger Wechsel der Umdrehungsgeschwindigkeit erfolgt und damit die Geschwindigkeit der Partikel 30 immer wieder abgebremst wird, wirkt die Zentrifugalkraft bei den beiden Außenflächen 38 und 39 der beiden Scheiben 15 und 16 unverändert. Insbesondere bei der Scheibe B 16, die durch den Einfüllstutzen 31 durchbrochen ist, kann die zentrifugal beschleunigte Luft an der Außenfläche 39 der Scheibe B 16 zu unerwünschten Saugwirkungen des Granulates 7 aus dem Einfüllstutzen 31 führen und Granulat 7 unmittelbar zum Auslassstutzen 34 unter Umgehung des Einflusses der Formkörper 1 befördert werden. Dieser Effekt kann vermindert werden, wenn die Außenfläche 39 der Scheibe B 16 relativ gut zum Gehäuse 20 durch einen Dichtring 35 abgedichtet wird. Eine andere Lösung dieses Problems besteht in der Anordnung von Schaufeln 19 auf der Aussenfläche 39 der Scheibe B 16, die der Zentrifugalkraft durch einen entgegengesetzten Luftstrom entgegenwirken.

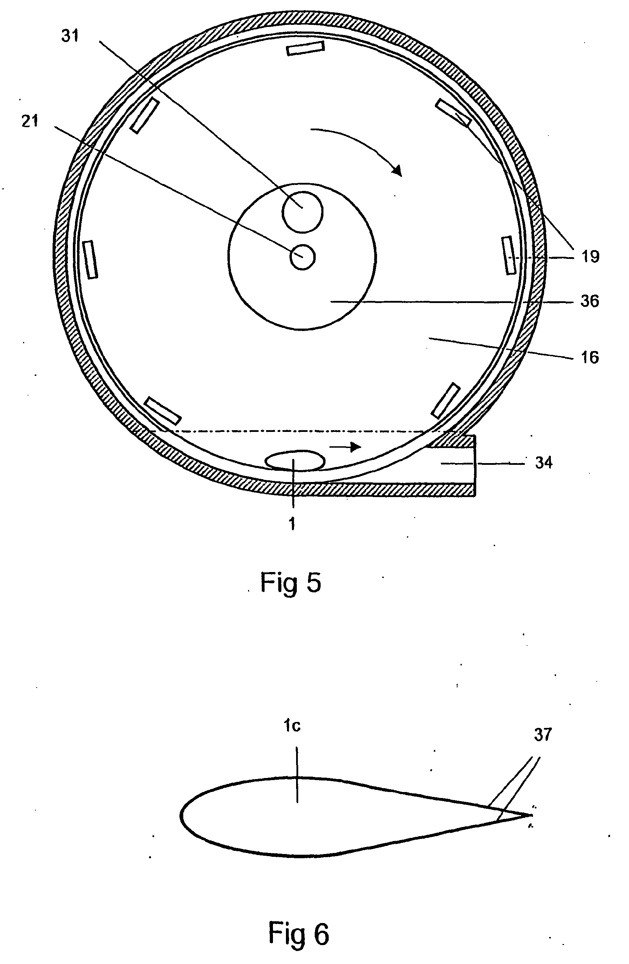

Die Partikel werden nach einem Durchlauf durch den Desintegratorraum 29 an dem Auslassstutzen 34 abgenommen, wie der Darstellung in Figur 5 zu entnehmen ist.

Es hat sich gezeigt, dass ein einmaliger Durchlauf von Granulat 7 durch den Desintegrator im Sinne der gewünschten Zerkleinerung und Aktivierung bereits ausreichend ist. Damit arbeitet die beschriebene Vorrichtung im Durchlaufverfahren. Soviel Granulat 7, wie dem Einfüllstutzen 31 auf Grund seiner Geometrie in die Einfüllkammer 18 zugegeben werden kann, entsteht fertig aufbereitetes Pulver aus Partikeln 30 am Auslassstutzen 34.

Figur 6 zeigt eine erfindungsgemäße Ausführung der Formkörper 1. Durch den spitzen Auslauf der Abströmflächen 37 werden Wirbel vermieden und damit die notwendige Antriebsenergie reduziert.

### Verwendete Bezugszeichen:

- 1: Formkörper
- 2: Formkörperspitze
- 3: Turbulenzen
- 4: Stoßdruckfront
- 5: Ansatzpunkt der Stoßdruckfront
- 6: Grenzfläche transsonischer Bereich
- 7: Granulat
- 8: Partikelweg
- 9: Strömungslinien
- 10: Innerer Radius des Formkörperlaufes der Scheibe 16
- 11: Innerer Radius des Formkörperlaufes der Scheibe 15
- 12: Äußerer Radius des Formkörperlaufes der Scheibe 16
- 13: Äußerer Radius des Formkörperlaufes der Scheibe 15
- 14: Rotationsachse
- 15: Scheibe A
- 16: Scheibe B
- 17: Scheibe B 1
- 18: Einlaufkammer
- 19: Schaufeln
- 20: Gehäuse
- 21: Welle B
- 22: Nabe B
- 23: Wellendichtring B
- 24: Lager B
- 25: Welle A
- 26: Lager A
- 27: Wellendichtring A
- 28: Nabe A
- 29: Desintegrationsraum
- 30: Partikel
- 31: Einfüllstutzen
- 32: Motor A
- 33: Motor B
- 34: Auslassstutzen
- 35: Dichtring
- 36: Einlassöffnung
- 37: Abströmflächen
- 38: Aussenfläche der Scheibe A
- 39: Aussenfläche der Scheibe B

## Patentansprüche

1. Verfahren zur Desintegration und tribochemischen Aktivierung insbesondere von anorganischen Stoffen, **dadurch gekennzeichnet, dass** die Ausgangsstoffe durch die Einwirkung von Stoßdruckfronten, die als Verdichtungsstoß an transsonisch bewegten Profilen auftreten, mit einer Impulsdauer von kleiner 10 µs und einer Folgefrequenz von größer 8 kHz auf eine Partikelgröße von kleiner 1 µm zerkleinert, also desintegriert werden.

2. Verfahren nach Anspruch 1, **dadurch gekennzeichnet, dass** bei der Desintegration von Stoffen mit kristallinem Aufbau ein Konglomerat von aktivierten Mischkristallen erzeugt wird, das eine erhöhte Fähigkeit zur veränderten Kristallbildung bei Zuführung von Wasser besitzt.

3. Verfahren nach Anspruch 1, **dadurch gekennzeichnet, dass** die Einwirkungsdauer der Stoßdruckfronten (4) solange erfolgt, bis eine Zerstörung der Kristallgitterstruktur der Partikel (30) eingetreten ist.

4. Verfahren nach Anspruch 1 und 3, **dadurch gekennzeichnet, dass** die Stoßdruckfronten durch rotierende Formkörper (1) mit aerodynamisch ausgeformten Profilen entstehen, die bis in den transsonischen Geschwindigkeitsbereich beschleunigt werden.

5. Verfahren nach Anspruch 1, 3 und 4, **dadurch gekennzeichnet, dass** die Partikel Stoßdruckfronten (4) von gegenläufig rotierenden Formkörpern (1) ausgesetzt werden.

6. Verfahren nach Anspruch 1 bis 5, **dadurch gekennzeichnet, dass** die Desintegration unter Schutzgas stattfindet.

7. Vorrichtung zur Desintegration und tribochemischen Aktivierung insbesondere von anorganischen Stoffen, enthaltend
a) auf einer rotierend angetriebenen Scheibe angeordnete Formkörper (1),
b) eine nahe dem Zentrum der Vorrichtung vorgesehene Zuführung (31) für den zu desintegrierenden Stoff,
c) sowie einen Auslass (34) für den desintegrierten Stoff,
**gekennzeichnet durch** folgende Merkmale:
d) die Formkörper (1) besitzen ein aerodynamisch geformtes Profil, das an der Vorderfront, in Drehrichtung, abgerundet ist und dessen Abströmflächen (37) im spitzen Winkel zueinander auslaufen;
e) der Antrieb ist derart ausgeführt, dass sich die Formkörper (1) mit einer Geschwindigkeit dicht unterhalb der Schallgeschwindigkeit bewegen und die die Formkörper umströmende Luft partiell Überschallgeschwindigkeit erreicht, wobei dieser Bereich (Ma > 1) rückseitig **durch** eine Stoßdruckfront (4) begrenzt ist.

8. Vorrichtung nach Anspruch 7, deren Antrieb derart aufgebaut ist, dass die Relativgeschwindigkeit der gegen den Formkörper (1) anströmenden Luft mindestens 0,75 bis 0,85 Mach beträgt.

9. Vorrichtung nach Anspruch 7, **gekennzeichnet durch** zwei mit Formkörpern (1) besetzte und von zwei Motoren (32, 33) gegenläufig angetriebene Scheiben (15, 16).

10. Vorrichtung nach Anspruch 9, **dadurch gekennzeichnet, dass** jede Scheibe (15, 16) mit zwei Gruppen von Formkörpern (1) besetzt ist.

11. Vorrichtung nach Anspruch 7, **gekennzeichnet durch** eine sich aus der Antriebsdrehzahl der Scheiben (15, 16) und der Anzahl der Formkörper (1) ergebende Folgefrequenz der Stoßdruckfronten (4) von mehr als 8 kHz.

12. Vorrichtung nach Anspruch 7, **dadurch gekennzeichnet, dass** die Oberfläche der Formkörper (1) als unterkritisches Profil ausgebildet ist, so dass die umfließende Strömung im wesentlichen laminar verläuft.

## Claims

1. Method for the disintegration and tribochemical activation in particular of inorganic materials, **characterised in that** the raw materials are comminuted to a particle size of less than 1 µm, i.e. are disintegrated, by the effect of impact pressure fronts, which occur as a compression impact on transsonically moved profiles, with a pulse duration of less than 10 µs and a repetition rate of more than 8 kHz.

2. Method according to claim 1, **characterised in that** during disintegration of materials with a crystalline structure a conglomerate of activated mixed crystals is produced which has increased capacity for forming modified crystals when water is added.

3. Method according to claim 1, **characterised in that** the duration of the effect of the impact pressure fronts (4) continues until the crystal lattice structure of the particles (30) is destroyed.

4. Method according to claim 1 and 3, **characterised in that** the impact pressure fronts are produced by rotating moulded parts (1) with aerodynamically formed profiles which are accelerated until in the transonic speed range.

5. Method according to claim 1, 3 and 4, **characterised in that** the particles are exposed to impact pressure fronts (4) of moulded parts (1) rotating in opposite directions.

6. Method according to claim 1 to 5, **characterised in that** disintegration takes place under protective gas.

7. Apparatus for the disintegration and tribochemical activation of in particular inorganic materials, comprising:
a) moulded parts (1) arranged on a disc driven so as to rotate,
b) a feed (31), provided close to the centre of the apparatus, for the material to be disintegrated,
c) and an outlet (34) for the disintegrated material, **characterised by** the following features:
d) the moulded parts (1) have an aerodynamically shaped profile which is rounded at the front section, in the direction of rotation, and of which the off-flow surfaces (37) meet at an acute angle,
e) the drive is configured in such a way that the moulded parts (1) move at a speed that is just below the speed of sound and the air flowing around the moulded parts partially reaches supersonic speed, this range (Ma>1) being limited at the back by an impact pressure front (4).

8. Apparatus according to claim 7, of which the drive is configured in such a way that the relative speed of the air flowing in against the moulded part (1) is at least 0.75 to 0.85 Mach.

9. Apparatus according to claim 7, **characterised by** two discs (15, 16) equipped with moulded parts (1) and driven in opposite directions by two motors (32, 33).

10. Apparatus according to claim 9, **characterised in that** each disc (15, 16) is equipped with two groups of moulded parts (1).

11. Apparatus according to claim 7, **characterised by** a repetition rate of the impact pressure fronts (4), resulting from the driven rotational speed of the discs (15, 16) and the number of moulded parts (1), of more than 8 kHz.

12. Apparatus according to claim 7, **characterised in that** the surface of the moulded parts (1) is constructed as a subcritical profile, so the circumfluent flow is substantially laminar.

## Revendications

1. Procédé pour la désintégration et l'activation tribo-chimique, en particulier de matières inorganiques, **caractérisé en ce que** les matières de départ sont broyées, donc désintégrées par application de fronts de chocs de pression, qui sont produits sous forme de chocs de compactage sur des profilés déplacés en régime transsonique, avec une durée d'impulsion inférieure à 10 µs et une fréquence de succession supérieure à 8 kHz, jusqu'à une taille de particules inférieure à 1 µm.

2. Procédé selon la revendication 1, **caractérisé en ce que** lors de la désintégration de matières à structure cristalline, on produit un conglomérat de cristaux mixtes activés qui possèdent une capacité accrue à la formation de cristaux modifiés en cas d'apport d'eau.

3. Procédé selon la revendication 1, **caractérisé en ce que** la durée d'application de fronts de chocs de pression (4) se poursuit aussi longtemps qu'il se produit une destruction de la structure de mailles cristallines des particules (30).

4. Procédé selon la revendication 1 et 3, **caractérisé en ce que** les fronts de chocs de pression sont engendrés par des corps conformés en rotation (1) avec des profils de forme aérodynamique, qui sont accélérés jusque dans la plage de vitesses transsoniques.

5. Procédé selon la revendication 1, 3 et 4, **caractérisé en ce que** les particules sont exposées à des fronts de chocs de pression (4) de corps conformés (1) en rotation en sens contraires.

6. Procédé selon les revendications 1 à 5, **caractérisé en ce que** la désintégration a lieu sous gaz protecteur.

7. Appareil pour la désintégration et l'activation tribo-chimique, en particulier de matières inorganiques, comprenant :
a) des corps conformés (1) agencés sur un disque entraîné en rotation,
b) une admission (31), prévue au voisinage du centre de l'appareil, pour les matières à désintégrer,
c) ainsi qu'une sortie (34) pour les matières désintégrées,
**caractérisé par** les éléments suivants :
d) les corps conformés (1) possèdent un profil de forme aérodynamique qui est arrondi au niveau de sa partie frontale antérieure, en direction de rotation, et dont les surfaces de fuite (37) convergent l'une vers l'autre sous un angle aigu ;
e) l'entraînement est réalisé de telle façon que les corps conformés (1) se déplacent à une vitesse légèrement au-dessous de la vitesse du son, et que l'air qui s'écoule autour des corps conformés atteint partiellement une vitesse supersonique, cette région (Ma > 1) étant limitée du côté dorsal par un front de choc de pression (4).

8. Appareil selon la revendication 7, dont l'entraînement est ainsi réalisé que la vitesse relative de l'air incident contre les corps conformés (1) s'élève au moins à 0,75 à 0,85 Mach.

9. Appareil selon la revendication 7, **caractérisé par** deux disques (15, 16) occupés par des corps conformés (1) et entraînés en sens contraires par deux moteurs (32, 33).

10. Appareil selon la revendication 9, **caractérisé en ce que** chaque disque (15, 16) est occupé par deux groupes de corps conformés (1).

11. Appareil selon la revendication 7, **caractérisé par** une fréquence de succession des fronts de chocs de pression (4), résultant de la vitesse d'entraînement des disques (15, 16) et du nombre des corps conformés (1), égale à plus de 8 kHz.

12. Appareil selon la revendication 7, **caractérisé en ce que** la surface des corps conformés (1) est réalisée sous forme de profil sous-critique, de sorte que l'écoulement environnant se produit de façon essentiellement laminaire.
